# EUROPÄISCHE PATENTSCHRIFT

(11) **EP 1 800 923 B1**
(45) Veröffentlichungstag und Bekanntmachung des Hinweises auf die Patenterteilung: **19.06.2013**
(21) Anmeldenummer: 07006139.5
(22) Anmeldetag: 01.02.2001
(51) Int. Cl.: B60J 1/20, B60J 3/02

(54) **Seitenfensterrollo mit Tragstab**
Side window blind with supporting bar
Store de fenêtre latéral doté d'une barre portante

(30) Priorität: 09.02.2000 DE 10005970
(43) Veröffentlichungstag der Anmeldung: 27.06.2007
(62) Teilanmeldung aus: 04014075.8
(73) Patentinhaber: BOS GmbH & Co. KG, 73760 Ostfildern (DE)
(72) Erfinder: Schlecht, Werner, 71665 Vaihingen / Enz-Aurich (DE); Seel, Holger, 71134 Aidlingen (DE); Walter, Herbert, 73061 Ebersbach (DE)
(74) Vertreter: Rüger, Barthelt & Abel

(56) Entgegenhaltungen:
- DE-A- 3 532 013
- DE-A1- 3 226 400
- DE-A1- 4 241 138
- DE-A1- 19 803 129
- DE-A1- 19 826 537
- DE-U1- 29 900 548
- US-A- 5 201 810

## Beschreibung

Für die hintere Heckscheibe von PKW sind eine Vielzahl von Lösungen bekannt, um ein dort befindliches Fensterrollo elektrisch fernbedient aus- und einzufahren.

Eine Lösung ist beispielsweise in EP-C-0 240 747 gezeigt, bei der zum Aufspannen lediglich biegesteife Hebel verwendet werden. Das bekannte Heckscheibenrollo weist einen Sockel auf, in dem eine Wickelwelle drehbar gelagert ist. Die Wickelwelle ist mit Hilfe eines Federmotors in Aufwickelrichtung einer Rollobahn vorgespannt, die an der Wickelwelle mit einer Kante angebracht ist. Die andere Kante ist mit einer Zugstange verbunden, an der zwei einarmige Hebel angreifen, die an dem Sockel gelagert sind. Die Lagerachsen der Hebel verlaufen rechtwinkelig zu der Wickelwelle. Beim Aufrichten der Hebel wird die Rollobahn von der Wickelwelle abgezogen.

Sonnenlicht tritt bei PKWs jedoch nicht nur durch die Heckscheibe ein, sondern auch durch die Seitenscheiben, wobei die Fondpassagiere dem über die Seitenscheiben hereinfallende Licht im allgemeinen noch häufiger ausgesetzt sind, weil die Fensterkante keine ausreichenden Schatten wirft, da die Fensterkanten der Seitenscheiben den Fondpassagieren unmittelbar benachbart ist.

Aus der DE 299 00 548 U ist Seitenfensterrollo für Kraftfahrzeuge bekannt, die wenigstens ein Seitenfenster aufweisen, das von einer unteren etwa horizontal verlaufenden Fensterrahmenkante und wenigstens einer seitlichen etwa senkrecht verlaufenden Fensterrahmenkante begrenzt ist. Das Seitenfensterrollo weist eine drehbar gelagerte Wickelwelle mit einer Rollobahn auf, deren Zuschnitt zumindest in einem Abschnitt ihrer Längserstreckung zumindest angenähert der Form des Seitenfensters entspricht. Die Rollobahn weist einen umlaufenden Rollobahnrand auf, der einen Abschnitt bildet, der an der Wickelwelle befestigt ist, sowie einen Abschnitt, der von der Wickelwelle abliegt. Es ist als Betätigungsmittel ein Elektromotor vorgesehen, der mit dem von der Wickelwelle abliegenden Abschnitt des Rollobahnrands verbunden ist. Zu dem Betätigungsmittel gehört ein wenigstens etwas biegesteifes Element gehört, das in den Rand der Rollobahn eingearbeitet ist. Die Bewegungsrichtung des biegesteifen Elements verläuft im Wesentlichen rechtwinkelig zu der Achse der Wickelwelle.

Aus der DE 198 26 537 A1 ist ebenfalls ein Seitenfensterrollo für Kraftfahrzeuge obiger Art bekannt. Es weist eine drehbar gelagerte, senkrecht orientierte Wickelwelle auf, auf die eine Rollobahn aufwickelbar ist. Der Zuschnitt der Rollobahn entspricht zumindest in einem Abschnitt ihrer Längserstreckung zumindest angenähert der Form des Seitenfensters. Ein Teil des umlaufenden Rollobahnrands ist an der Wickelwelle befestigt und ein Abschnitt liegt von der Wickelwelle ab. Ein zur Betätigung des Rollos vorgesehener Arm ist mit einem unteren Ende an einem in Führungsschienen laufenden Schlitten befestigt. Sein oberes Ende ist gelenkig mit dem von der Wickelwelle abliegenden Abschnitt des Rollobahnrands verbunden. Zu dem Betätigungsmittel gehört außerdem wenigstens eine starre Stange, deren freies Ende über den Schlitten und den Arm mit dem Rollobahnrand verbunden ist. Die Bewegungsrichtung des Arms verläuft sich im Wesentlichen rechtwinkelig zu der Achse der Wickelwelle. Zum kraftbetätigten Ein- und Ausfahren der Rollobahn dient ein Elektromotor.

Aus der DE 42 41 138 A1 ist ein Rollo für die Frontscheibe eines Kraftfahrzeugs bekannt. Es weist eine drehbar gelagerte Wickelwelle mit einer Rollobahn auf, die einen Abschnitt bildet, der an der Wickelwelle befestigt ist, sowie einen Abschnitt, der von der Wickelwelle abliegt. Als Betätigungsmittel, das mit dem von der Wickelwelle abliegenden Abschnitt des Rollobahnrands verbunden ist, ist eine vertikale steife Zahnstangevorgesehen, die über ein Ritzel von einem Elektromotor angetrieben wird. Die Stange ist mit ihrem freien Ende mit dem unteren Rollobahnrand verbunden und in einer ortsfesten Führungseinrichtung längsverschieblich geführt.

Die US 5 201 810 offenbart ein Rollo für eine Heckscheibe eines Kraftfahrzeugs. Es weist eine drehbar gelagerte Wickelwelle mit einer Rollobahn auf, die einen Abschnitt bildet, der an der Wickelwelle befestigt ist, sowie einen Abschnitt, der von der Wickelwelle abliegt. Als Betätigungsmittel, das mit dem von der Wickelwelle abliegenden Abschnitt des Rollobahnrands verbunden ist, sind zwei seitlich neben der Heckscheibe laufende Schlitten Vorgesehen, die auf Führungen laufen und von Schubgliedern betätigt werden. Die beiden Schlitten tragen zwischeneinander eine mehrteilige teleskopierbare Stange, an der die von der Wickelwelle abliegende Kante der Rollobahn gehalten ist.

Es besteht deswegen ein Bedarf an einem einfach zu bedienenden Rollo für die Seitenfenster, insbesondere für die hinteren Seitenfenster.

Allerdings ist das Seitenfensterrollo hinsichtlich seiner mechanischen Gestaltung wesentlich komplizierter als ein Heckscheibenrollo, bei dem die Rollobahn im allgemeinen eine symmetrischen, trapezförmigen oder rechteckigen Zuschnitt hat. Für die Seitenfenster können solche einfachen Zuschnitte nicht verwendet werden, da die Kontur des Seitenfensters relativ kompliziert ist und zweckmäßigerweise die gesamte Fensterfläche abgeschattet werden soll.

Die DE 299 00 648 U1 beschreibt ein elektrisch betätigtes Seitenfensterrollo. Das Rollo weist eine drehbar gelagerte Wickelwelle auf, an der mit einer Kante eine Rollobahn mit dreieckigem Zuschnitt befestigt ist. Der Rand der Rollobahn ist mit einer Randverstärkung versehen, die einerseits so flexibel ist, dass sie samt Rollobahn auf der Wickelwelle aufwickelbar ist, andererseits aber so steif sein soll, dass sie die obere Spitze der Rollobahn gegen die Innenseite der Fensterscheibe andrückt.

Aus der DE 35 32 013 A1 ist ein Heckscheibenrollo mit einer Teleskopstange zum Ausfahren des Rollos bekannt. Die unterhalb der Hutablage auf eine Wickelwelle aufgewickelte Rollobahn ist mit einer Ausfallstange versehen, die an der auszuziehenden Kante des Rollos befestigt ist. Das Teleskop ist ebenfalls mit der Ausfallstange verbunden und schiebt diese parallel zu der Heckscheibe von der Hutablage weg zum Kraftfahrzeugdach, um damit die Rollobahn gegen die Aufwickelkraft der Wickelwelle auszuziehen. Ein großzügiger Abstand zwischen der Rollobahn und der Heckscheibe verhindert ein Anschlagen der Auszugstange an die Scheibe.

Ausgehend hiervon ist es Aufgabe der Erfindung ein elektrisch bedienbares Seitenfensterrollo zu schaffen

Bei dem erfindungsgemäßen Seitenfensterrollo ist eine drehbar gelagerte Wickelwelle vorgesehen, an der mit einem Randabschnitt der Zuschnitt der Rollobahn befestigt ist. An einem von diesem Abschnitt anderen abliegenden Abschnitt des Rollobahn greift ein Betätigungselement an, um die Rollobahn von der Wickelwelle abzuziehen und im aufgespannten Zustand zu halten. Zum Ein- und Ausfahren der Rollobahn werden kraftbetätigte Antriebsmittel verwendet.

Auf diese Weise kann beispielsweise von der Fahrersei te her, das betreffende Seitenfensterrollo gesteuert werden. Auch die Fondpassagiere haben eine einfache Möglichkeit das Seitenfensterrollo auf und ab zubewegen. Darüber hinaus gestattet die neue Konstruktion das Seitenfensterrollo weitgehend innerhalb der Tür bzw. hinter der Türverkleidung verschwinden zu lassen. Im eingefahrenen Zustand ist es dann praktisch vollständig hinter die Umrisse des Fensters zurückgezogen. Es stehen keine Teile wie Grifflaschen und dergleichen vor, die sonst für handbediente Seitenfensterrollos erforderlich wären.

Die Anbringung der Wickelwelle unterhalb der unteren Fensterrahmenkante gestattet es, die Wickelwelle in jenem Bereich der Tür unterzubringen, der bei heutigen Fahrzeugen ohnehin viel leeres Volumen innerhalb der Tür bereitstellt.

Um die Rollobahn im aufgespannten Zustand flatter- und schwingungsfrei zu halten und auch während der Ausfahrbewegung zu führen, kommen grundsätzlich zwei Lösungen in Frage:

Die eine Lösung sieht wenigstens eine Führungsschiene vor, die parallel zu einem Rand des Fensters verläuft. Mit Hilfe dieser Führungsschiene wird ein, von der Wickelwelle abliegender Abschnitt der Rollobahn gefesselt geführt.

Die andere Möglichkeit besteht darin, als Betätigungsmittel im Wesentlichen biegesteife Schubglieder zu verwenden, um die Rollobahn von der Wickelwelle abzuziehen. Die Schubglieder greifen an derjenigen Kante der Rollobahn an, die beim Ein- und Ausfahren den größten Weg zurücklegt. Dabei wird zumindest während des Abwickelvorgangs die Vorderkante der Rollobahn ausschließlich durch die Schubglieder geführt und in Querrichtung gehalten. Die Schubglieder müssen deswegen zumindest in Richtung senkrecht zu einer Ebene, die von der aufgespannten Rollobahn definiert ist, hinreichend biegesteif sein. In Richtung parallel dazu wird die Führung weitgehend durch die Rollobahn selbst in Verbindung mit der Vorspannung erbracht, weshalb in dieser Richtung eine besondere Biegesteifigkeit nicht unbedingt erforderlich ist.

Im vollständig aufgespannten Zustand kann die Oberkante des Rollobahnzuschnittes in hakenförmigen Taschen aufgenommen sein. Diese verhindern, Schwingungen der Oberkante der aufgespannten Rollobahn durch die Fahrzeugerschütterungen. Solche Schwingungen werden auch weitgehend vermeiden, weil in der Erfindung die Schubglieder derart gerichtet sind, dass die Oberkante der Rollobahn beim Ausfahren auf der Innenseite der Scheibe entlang gleitet, weil sie an die Scheibe angedrückt wird.

Eine sehr stabile Führung der Rollobahn ergibt sich, wenn die Rollobahn zwischen zwei Führungsschienen geführt wird, die ausgehend von der Wickelwelle etwa in die gleiche Richtung verlaufen. Da diese Führungsschienen wegen der Seitenfenstergeometrie nicht zueinander parallel verlaufen, enthält die Rollobahn zumindest einen Spriegel, der längenverstellbar ist. Er passt sich damit selbstätig dem sich verändernden Abstand zwischen den Führungsschienen an.

Die Ober- oder Seitenkante der Rollobahn kann auch an einem Arm aufgenommen sein, der an einem in der Führungsschiene laufenden Schlitten befestigt ist. Der Arm verläuft parallel zu dem betreffenden Rand des Fensters und führt die jeweilige Kante der Rollobahn praktisch über ihre gesamte Länge.

Verspannungen in der Rollobahn lassen sich vermeiden, wenn der Arm als Schiene ausgebildet ist, in der die betreffende Rollobahnkante verschieblich aufgenommen ist.

Um die Betätigung und Steuerung der Rollobahn möglichst einfach zu gestalten, umfassen die Antriebsmittel des erfindungsgemäßen Seitenrollos wenigstens einen Elektromotor sowie Federmittel. Zwischen dem Elektromotor und den Federmitteln liegt kinematisch die Rollobahn, wobei der Antriebsmotor die Position der Ober- oder Seitenkante der Rollobahn definiert, während die Federmittel als "Slave-Antrieb" für die Vorspannung in der Rollobahn sorgen.

Je nach Einbauverhältnissen kann der Elektromotor mit der Wickelwelle oder mit jenem Teil der Rollobahn zusammenwirken, der beim Ausfahren den größten Weg zurücklegt, während die Federmittel jeweils am anderen Ende der Rollobahn angreifen. Wenn der Elektromotor mit der Wickelwelle unmittelbar getrieblich verbunden ist, ist derjenige Teil der Rollobahn, der den größten Weg zurücklegt, über die Betätigungsmittel in Gestalt von Seilen mit einer Zugfeder verbunden. Dies gestattet unter anderem auch auf einfache Weise, unterschiedliche Laufwege der Betätigungsmittel auszugleichen, wenn beispielsweise ein Betätigungsmittel in einer Geraden und das andere in einer gekrümmten Führungsschiene läuft.

Bei der anderen denkbaren Ausführungsform sitzt die Feder als Federmotor in der Wickelwelle, während der Elektromotor über die Betätigungsglieder mit der Rollobahn gekoppelt ist, und zwar mit jenem Teil der Rollobahn, der beim Auf- und Abwickeln wiederum den größten Weg zurücklegt.

Die Betätigungsmittel wirken als Schubglieder. Bowdenzüge können verwendet werden, wobei die Seele des Bowdenzugs entsprechend drucksteif ausgeführt bzw. geführt sein muss.

Zumindest an einem Ende sind die linienförmigen Betätigungsglieder mit einer Art Verzahnung versehen, mit der sie formschlüssig in ein Ausgangszahnrad des Antriebsmotors eingreifen. Derartige Betätigungsglieder sind unter der Handelsbezeichnung "SU-flexwelle" kommerziell verfügbar und bestehen aus einem in Längsrichtung verlaufenden Drahtkern, auf dessen Außenumfangsfläche ein ebenfalls aus einem Draht gebildete Schraube aufgebracht ist. Der Abstand zwischen benachbarten Windungen der Schraube entspricht der Dicke des Zahns des Antriebszahnrads. Um Klappergeräusche zu vermeiden, können zwischen den Drahtwindungen der Schraube Borsten vorhanden sein, die der Anordnung das Aussehen einer Flaschenbürste geben.

Im übrigen sind Weiterbildungen der Erfindung Gegenstand von Unteransprüchen.

In der Zeichnung sind Ausführungsbeispiele des Gegenstandes der Erfindung dargestellt. Es zeigen:
- Fig. 1: den Fondbereich einer Limousine, mit Blick auf die Innenseite der hinteren, rechten Tür, in einer aufgebrochenen perspektivischen Darstellung,
- Fig. 2: die hintere, rechte Seitentür nach Fig. 1, in einer teilweise aufgebrochenen Darstellung,
- Fig. 3: wesentliche Funktionsteile des Seitenrollos gemäß Fig. 2, in einer perspektivischen, schematischen Darstellung, und
- Fig. 4: ein Ausführungsbeispiel des Seitenrollos ohne Führungsschienen, in einer stark schematisierten Darstellung einer Seitentür mit ausgebrochener Innerverkleidung.

In der nachfolgenden Figurenbeschreibung werden Begriffe wie "vorne", "hinten", "oben" oder "unten" sowie Begriffe mit ähnlichem Bedeutungsinhalt einschließlich der Begriffe "rechts" und "links" in der Weise verwendet, wie sie zur Richtungsbezeichnung an einem Kraftfahrzeug üblicher Weise gebraucht werden.

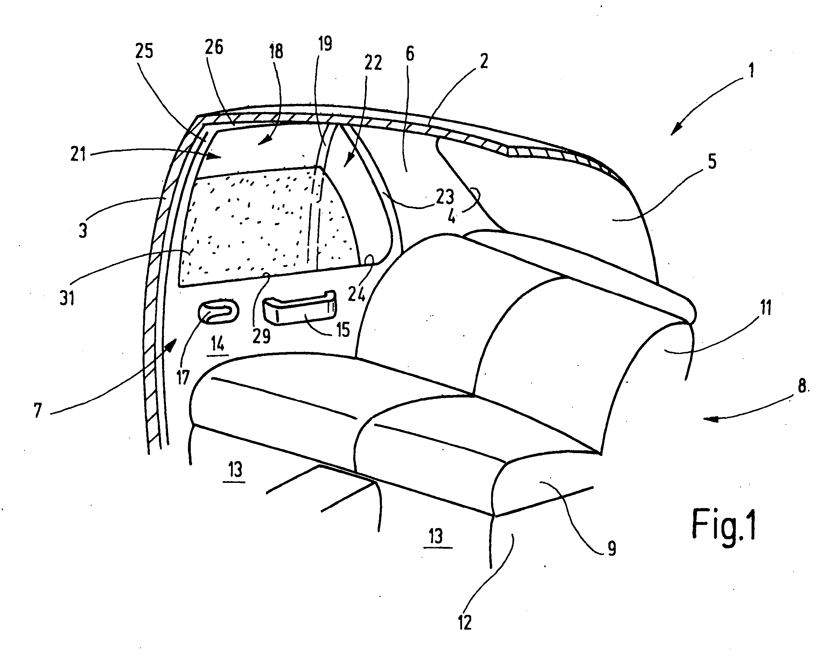

Fig. 1 stellt den aufgebrochenen, abgeschnitten Fondbereich eines PKW dar. Die Figur veranschaulicht einen Blick auf die rechte Innenseite, die zu der nicht veranschaulichten linken Innenseite spiegelbildlich ist. Die Darstellung ist vereinfacht, so sind beispielsweise Karosserie Innenstrukturen, wie Versteifungen und Befestigungsmittel nicht gezeigt, da ihre Darstellung für das Verständnis der Erfindung nicht erforderlich ist.

Der veranschaulichte Karosserieabschnitt 1 weist ein Dach 2 auf, von dem seitlich eine B-Säule 3 nach unten zu einer nicht gezeigten Bodengruppe führt. Eine entsprechende B-Säule wäre auf der weggebrochenen Seite des Fahrzeugs zu denken. Das Dach 2 geht an seiner Hinterkante in eine Heckfensteröffnung 4 über, in der eine Heckscheibe 5 eingesetzt ist. Seitlich endet die Heckscheibenöffnung 4 an einer C-Säule 6, die sich im Abstand zu der B-Säule 3 befindet. Zwischen der B-Säule 3 und der C-Säule 6 ist an der B-Säule 3 eine hintere, reche Seitentür 7 in der bekannten Weise anscharniert.

Auf der Höhe der hinteren, rechten Seitentür 7 befindet sich eine Rücksitzbank 8, zu der eine Sitzfläche 9 sowie eine Rücksitzlehne 11 gehören. Die Rücksitzfläche 9 liegt auf einer Sockelfläche 12, die zu der Bodengruppe gehört und in der vor der Rücksitzfläche 9 Fußräume 13 ausgebildet sind.

Die dem Innenraum zugekehrte Innenseite der Seitentür 7 ist mit einer Innenverkleidung 14 versehen, an der ein Türgriff 15 befestigt ist und in dem eine Betätigungsklinke 17 eingelassen ist, um das Schloss der Seitentür 7 zu öffnen.

Die Seitentür 7 enthält oberhalb der Innenverkleidung 14 eine Fensteröffnung 18, die durch einen Zwischensteg 19 in zwei Abschnitte 21 und 22 aufgeteilt ist. Der Abschnitt 22 hat eine etwa dreieckförmige Gestalt und wird nach vorne von dem Zwischensteg 19 nach hinten durch einen hinteren Rahmenabschnitt 23 der Tür sowie einen unteren Fensterrahmenabschnitt 24 begrenzt. In dem Seitenfensterausschnitt 22 ist eine Fensterscheibe fest und unbeweglich eingesetzt.

Der Fensteranschnitt 21 hat eine im weitesten Sinne rechteckige Gestalt. Er wird nach vorne durch einen vorderen Rahmenabschnitt 25, nach oben durch einen oberen Rahmenabschnitt 26, nach hinten durch den Zwischensteg 19 und unten durch den bereits erwähnten unteren Fensterrahmenabschnitt 24 begrenzt. Der vordere Rahmenabschnitt 25 sowie der Zwischensteg 19 enthalten in bekannter Weise Führungsschienen, in denen eine Seitenfensterscheibe verschieblich geführt ist. Der Zwischensteg 19, der von dem oberen Rahmenabschnitt 26 bis zu dem unteren Fensterrahmenabschnitt 24 reicht, verläuft deswegen im Wesentlichen parallel zu dem vorderen Rahmenabschnitt 25, zumindest parallel zu der dort vorhanden Führungsschiene.

Die Seitenfensterscheibe ist in der Fig. 1 nicht zu erkennen. Diese Fensterscheibe ist in der bekannten Weise zwischen der äußeren Blechhaut der Seitentür und der inneren Türschale versenkbar. Es sind ihr auch Antriebsmittel zugeordnet, um die Fensterscheibe auf- und ab zu bewegen.

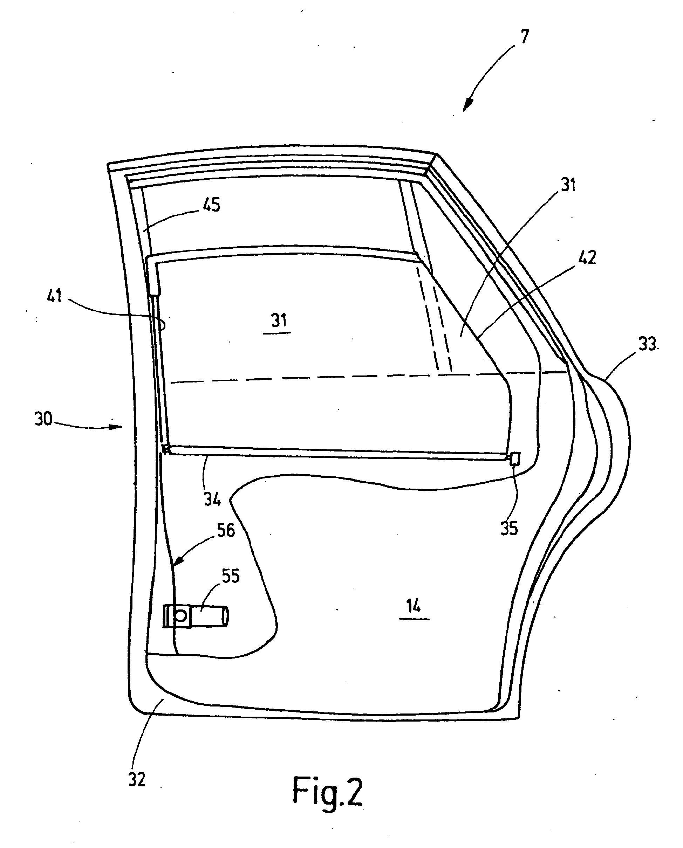

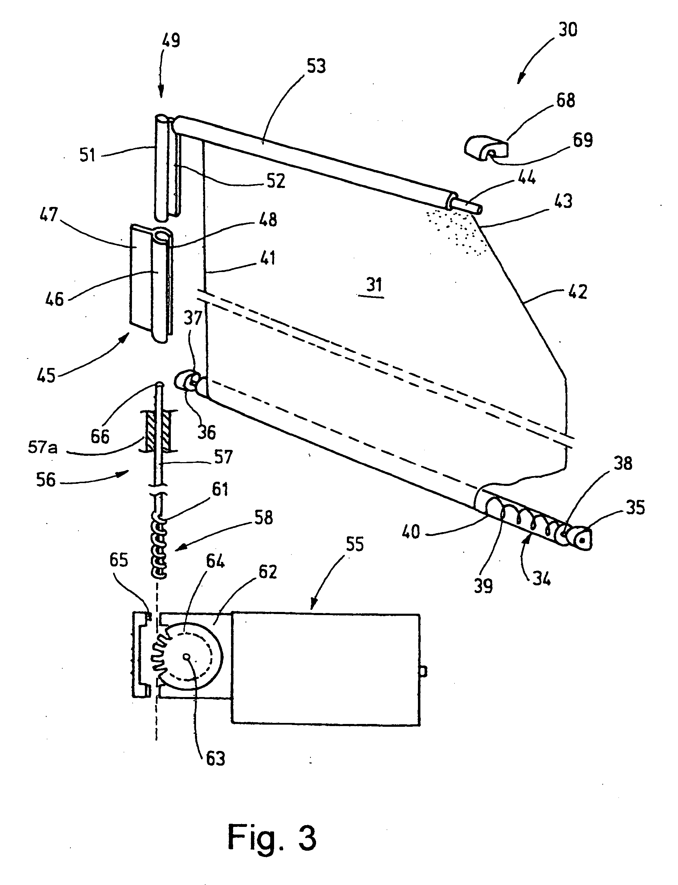

Die Seitentür 7 ist mit einem, in den Figuren 2 und 3 im Einzelnen dargestellten, Seitenfensterrollo 30 versehen, dessen Rollobahn 31 in den Darstellungen der Figuren 1 und 2 teilweise ausgefahren ist, um so den Fondbereich der Fahrgastzelle gegen seitliche Sonneneinstrahlung zu schützen. Die Rollobahn 31 läuft durch einen neben oder unterhalb des unteren Fensterrahmenabschnitts 24 vorhandenen Schlitz 29 heraus, der sich in der Innenverkleidung 14 oder zwischen der Innenverkleidung 14 und der Türinnenschale befindet.

In Fig. 2 ist die Seitentür 7 gesondert veranschaulicht. Es sind in Fig. 2 ein umlaufender Türfalz 32, Abschnitte der aus Blech bestehenden Türaußenhaut 33 sowie die aufgebrochen gezeigte Innenverkleidung 14 zu erkennen, die sich auf der Innenschale der Tür 7 befindet.

Zu dem Seitenfensterrollo 30 gehört eine Wickelwelle 34, die unterhalb der Fensterunterkante 32 hinter der Innenverkleidung 14 auf der Tür 7 gelagert ist. Dazu trägt die Tür 7 im Abstand von einander zwei Lagerböcke 35 und 36 die Lagerzapfen 37 und 38 aufnehmen, die axial aus der rohrförmigen Wickelwelle 34 hervorstehen. In der Wickelwelle 34 befindet sich ein schematisch gezeigter Federmotor 39, der bei 40 mit der Wickelwelle 34 fest verbunden ist und dessen anderes Ende drehfest an den Lagerzapfen 38 angekoppelt ist. Der Lagerzapfen 38 wiederum sitzt drehfest im den Lagerbock 35. Der Federmotor 39 bildet einen Teil der Antriebseinrichtung des Seitenfensterrollos 30 und erzeugt eine Vorspannkraft im Sinnes eines Aufwickeln der Rollobahn 31 auf die Wickelwelle 34. Hierzu ist die Rollobahn 31 an der Wickelwelle 34 beispielsweise mittels eines Keders in bekannter Weise befestigt.

Die Rollobahn 31 besteht aus einem Zuschnitt aus einer Kunststofffolie, die ausreichend das Sonnenlicht abschirmt. Die Außenkontur entspricht der Außenkontur der Fensteröffnung 18, d.h. der Summe der beiden Fensteröffnungen 21 und 22.

Die Rollobahn 31 wird von einer in Fahrtrichtung liegenden vorderen geraden Kante 41, einer hinteren konturierten Kante 42 sowie einer oberen Kante 43 und einer an der Wickelwelle 34 befestigten, nicht erkennbaren Kante, begrenzt.

An der oberen Kante 43 ist eine beispielsweise aus einem Kunststoffprofil bestehende Randverstärkungsleiste 44 angebracht, die von der Hinterkante 42 bis zu der Vorderkante 41 reicht.

Zu dem Seitenfensterrollo 30 gehört ferner eine Führungsschiene 45, die an der Tür 7 im Bereich des vorderen Fensterrahmenabschnittes 25 befestigt ist und von dem oberen Fensterrahmenabschnitt 26 bis in das Innere der Tür 7 reicht.

In Fig. 3 ist lediglich ein Abschnitt zu erkennen. Die Führungsschiene 45 setzt sich aus einem C-förmigen Profil mit einer hintergriffigen Führungsnut 46 und einem angeformten leistenförmigen Befestigungsflansch 47 zusammen. Die Führungsnut 46 öffnet sich an einem Schlitz 48, der dem Flansch 47 gegenüber liegt und von dem Flansch 47 weg zeigt.

In der Führungsschiene 45 läuft ein Schlitten 49, bestehend aus einem im Querschnitt an den Innenraum der Führungsnut 46 angebrachten Grundkörper 51, von dem ein leistenförmiger Flansch 52 ausgeht, der durch den Schlitz 48 nach außen ragt. Im einfachsten Falle ist der Grundkörper 51 im Wesentlichen zylindrisch und der Innenraum der Führungsnut 46 der Führungsschiene 45 ebenfalls zylindrisch.

An dem Flansch 52 ist ein Ausleger 53 befestigt, der von dem Grundkörper 51 im Wesentlichen rechtwinkelig weg steht und seinerseits die Form einer Führungsschiene hat, in der die Randverstärkungsleiste 44 längs verschieblich aufgenommen ist. Der Ausleger 53 ist in der Weise gestaltet, dass die Randverstärkungsleiste 44 lediglich einen Freiheitsgrad hat, nämlich in Richtung parallel zur Längserstreckung des Auslegers 43. In Richtung senkrecht dazu ist sie in dem Ausleger 53 gefesselt.

Um das Seitenfensterrollo 30 wahlweise ein- und auszufahren, gehört zu der Antriebseinrichtung neben dem Federmotor 39 ein Getriebemotor 55, der über ein Betätigungsglied 56 mit dem Schlitten 49 gekoppelt ist. Das Betätigungsglied 56 wird von einem drucksteifen, linienförmigen Element, beispielsweise einem flexiblen Metall- oder Kunststoffdraht 57, der Seele eines Bowdenzugs oder einer schubsteifgeführten, verseilten Drahtlitze gebildet. Zumindest an dem motorseitigen Ende trägt das Betätigungsglied 56 auf seiner Außenumfangsfläche eine eine Schraube oder Schnecke 58 bildende Drahtwicklung 61, die unverschiebbar mit dem Betätigungsglied 56 verbunden ist. Betätigungsglieder dieser Art sind auch unter der Handelsbezeichnung "SU-flexwelle" verfügbar und werden unter anderem bei Fensterhebern eingesetzt.

Der Antriebsmotor 55 ist ein permanent erregter Gleichstrommotor, dem ein Untersetzungsgetriebe 62 nachgeordnet ist. Auf einer Ausgangswelle 63 des Getriebes 62 sitzt drehfest ein Stirnzahnrad 64, dessen Teilung mit der Teilung der Schnecke oder Schraube 58 übereinstimmt.

Neben dem Stirnzahnrad 64 befindet sich in dem Gehäuse des Getriebes 62 eine Führung 65, die derart gestaltet ist, dass sie die Schraube 58 des Betätigungsgliedes 56 tangential zu dem Ausgangszahnrad 64 führt und erzwingt, dass die Zähne des Stirnzahnrades 64 formschlüssig zwischen den Windungen der Schraube 58 eingreifen können.

Das Betätigungsglied 56 verbindet das Stirnzahnrad 64 getrieblich mit dem Schlitten 51, und zwar wird es ausgehend von dem Getriebe 62 bzw. der dort vorhanden Führung 65 drucksteif in einer Hülle 57a bis zum unteren Ende der Führungsschiene 45 geführt. An dieser Stelle tritt das Betätigungsglied 56 in den Innenraum der Führungsnut 46 ein. Das freie Ende 66 des Betätigungsgliedes 56 liegt frei ansto-βend am unteren Ende des Führungsschlittens 51 an.

Im eingebauten Zustand sind bei geöffneten Seitenfensterrollo 30 praktisch keine Teile von diesem zu erkennen. Die Führungsschiene 45 verläuft neben der Fensterführung und verschwindet somit weitgehend in der Fensterrahmenverkleidung der Tür 7. Lediglich der Ausleger 53 wäre in einem Schlitz 29 zu erkennen, der einerseits von der Innenverkleidung 14 und andererseits von dem unteren Fensterrahmenabschnitt 24 begrenzt ist und durch den aus dem Türinneren das Seitenfensterrollo 30 ausgefahren wird.

Die Handhabung und Funktionsweise des beschrieben Seitenfensterrollos ist wie folgt:

Im Ruhezustand ist die Rollobahn 31 unter der Wirkung des Federmotors 38 auf die Wickelwelle 34 aufgewickelt. Der Schlitten 51 ist in der Führungsschiene 45 nach unten gefahren, soweit bis der Ausleger 53 den zuvor erwähnten Rolloschlitz 29 entsprechend der Länge des Auslegers 43 ausfüllt.

Wenn der Benutzer ausgehend von dieser Betriebsstellung das Seitenfensterrollo 30 ausfahren will, setzt er über einen nicht weiter gezeigten elektrischen Schalter den Antriebsmotor 55 in Gang und zwar in einer solchen Drehrichtung, dass das Stirnzahnrad 64 das drucksteife bzw. drucksteif geführte Betätigungsglied 56 in Richtung auf die Führungsschiene 45 vorschiebt. Bei dieser Vorschubbewegung drückt das in dem Innenraum der Führungsschiene 45 geführte Betätigungsglied 56 den Führungsschlitten 49 zusammen mit dem daran befestigten Ausleger 53 nach oben in Richtung auf den oberen Fensterrahmenabschnitt 26. Dabei wird entsprechend Rollobahn 31 von der Wickelwelle 34 abgewickelt und durch den Rolloschlitz 29 in der Tür 7 nach oben herausgezogen.

Sobald der Schlitten 49 am oberen Ende der Führungsschiene 45 angekommen ist und an entsprechende Begrenzungsanschläge anstößt, steigt der Motorstrom an, was in bekannter Weise von einer an sich bekannten Überwachungsschaltung ausgewertet wird, um unabhängig von der Schaltersteuerung durch den Benutzer den Antriebsmotor 55 stromlos zu schalten. Die Anordnung sorgt in bekannter Weise ferner dafür, ein Wiedereinschalten des Motorstroms nur für die umgekehrte Drehrichtung zuzulassen.

Die Rollobahn 31 ist nunmehr vollständig ausgefahren und der Ausleger 53 stößt an der oberen Fensterrahmenkante 26 an. Vor der gesamten Fensterfläche ist die Rollobahn 31 aufgespannt.

Selbst wenn der Winkel zwischen der Führungsschiene 45 und der Achse der Wickelwelle 34 nicht 90°beträgt, können in der Rollobahn 31 keine Verspannungen auftreten, weil die Randverstärkungsleiste 44 sich in dem Ausleger 53 zumindest ein Stück weit längsverschieblich bewegen kann.

Ein Schwingen des Auslegers 53 läßt sich bei ausgefahrenen Seitenfensterrollo 30 vermeiden, wenn entsprechend der oberen Endstellung an der Innenseite der Tür 7 eine hakenförmige Tasche 68 befestigt wird, die ein nach unten offene Nut 69 enthält. Die Nut 69 nimmt in der oberen Endstellung den Ausleger 43 an einer Stelle auf, die von dem Schlitten 51 beabstandet ist. Pendelbewegungen des Auslegers 53 um die Längsachse des Schlittens 49 sind dadurch mit Sicherheit ausgeschlossen.

Zum Einfahren des Seitenfensterrollos 30 setzt der Benutzer den Elektromotor 55 über einen entsprechenden Schalter in der entgegengesetzten Drehrichtung in Funktion. Das Stirnzahnrad 54, das mit der Schraube 58 kämmt, zieht das Betätigungsglied 56 nach unten aus der Führungsschiene 45 zurück, wodurch die gegen den Schlitten 49 wirkende Vorschubkraft nachlässt. Der Federmotor 38 ist dadurch in der Lage entsprechend dem Zurückweichen des Betätigungsgliedes 56 die Rollobahn 31 wieder auf die Wickelwelle 34 aufzuwickeln.

Die untere Endstellung des Betätigungsgliedes kann in ähnlicher weise abgefragt werden, wie die obere Endstellung, und in entsprechender Weise stillgesetzt werden.

Ersichtlicherweise wird die Rollobahn 31 durch die Wirkung des Federmotors 38 gespannt gehalten, während die Position durch den selbsthemmend wirkenden Antriebsmotor 55 vorgegeben wird.

Wie sich aus der Erläuterung ergibt, könnte der Federantrieb 39 mit dem Antriebsmotor 55 auch die Plätze tauschen, in der Weise, dass der Antriebsmotor 55 die Wickelwelle 34 formschlüssig antreibt, während das Betätigungsglied 56 durch eine Druckfeder beaufschlagt oder eine solche ersetzt wird. Bei einer derartigen Ausführungsform würde der Schlitten 51 in Abwickelrichtung vorgespannt werden, während die Rollobahn 31 gegen die Wirkung der Feder auf der Wickelwelle 38 aufgewickelt wird.

Es wäre schließlich auch denkbar, als Betätigungsglied 56 ein Seil zu verwenden, das einends an dem Schlitten 49 befestigt ist und anderenends an einer Zugfeder. Die Zugfeder würde über das Seil ebenfalls bestrebt sein, den Schlitten 49 nach oben zu ziehen, wobei die Bewegung durch das Zusammenspiel der Wickelwelle 34 mit dem Antriebsmotor 55 gehemmt bzw. freigegeben würde.

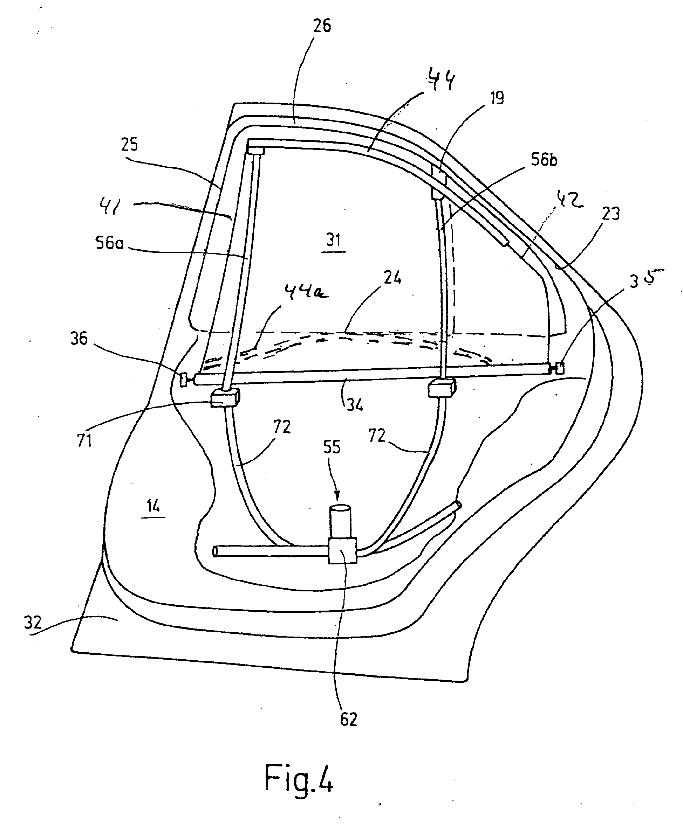

Bei dem zuvor beschriebenen Ausführungsbeispiel weist das Seitenfensterrollo 30 eine einzige Führungsschiene 45 auf. In Fig. 4 ist stark schematisiert ein Ausführungsbeispiel gezeigt, bei dem Seitenfensterrollo 30 frei von Führungsschienen ist.

Wie zuvor ist unterhalb der unteren Fensterrahmenkante 24 hinter der Innenverkleidung 14, die Wickelwelle 34 drehbar gelagert. An ihr ist mit einer Kante, wie zuvor beschrieben, die Rollobahn 31 befestigt, deren Zuschnitt etwa wie in Fig. 3 gezeigt gestaltet ist.

Unterhalb der Wickelwelle 34 sind an der Tür 7 im Abstand zu einander zwei Gleitführungsblöcke 71 befestigt. Aus jedem der Gleitführungsblöcke 71 tritt nach oben ein drucksteifes und verhältnismäßig biegesteifes zylindrisches Betätigungsglied 56a und 56b aus. Die unteren Enden der beiden Betätigungsglieder 56a und 56b sind in der gleichen weise gestaltet, wie dies im Zusammenhang mit Fig. 3 erläutert ist und sie laufen durch Führungsrohre 72 ausgehend von den Gleitführungsblöcken 71 zu dem Antriebsmotor 55 und in dessen Getriebe 62. Da beide Betätigungsglieder 56 durch dasselbe Stirnzahnrad 64 angetrieben werden, laufen sie zwangsläufig mit derselben Geschwindigkeit und demselben Hub, d.h. exakt synchron zueinander.

Das Betätigungsglied 56b liegt vor dem Zwischensteg 19.

Die freien Enden der Betätigungsglieder 56a und 56b sind unmittelbar mit der Verstärkungsleiste 44 verbunden.

Beim Ausfahren drücken die Betätigungsglieder die Verstärkungsleiste 44 nach oben und wickeln dadurch gegen die Wirkung des Federmotors in der Wickelwelle 34 die Rollobahn von der Wickelwelle 34 ab.

Der aus den Gleitführungsblöcken 71 austretende Teil der Betätigungsglieder 56a und 56b ist ein verhältnismäßig steifer Kunststoff oder Metalldraht, der einerseits dem bogenförmigen Verlauf der Führungsrohre 72 folgen kann, andererseits aber in der Lage ist, die Verstärkungsrandleiste 44 der Rollobahn 31 zu tragen.

Die freien Enden der Betätigungsglieder 56a und 56b sind unlösbar mit der Randverstärkungsleiste 44 verbunden.

Da die Randverstärkungsleiste 44 bei dem gezeigten Ausführungsbeispiel verhältnismäßig stark gekrümmt verläuft und nicht auf der Wickelwelle 34 aufgewickelt werden kann, sitzt die Wickelwelle 34 gegenüber der unteren Fensterkante 24 zurückversetzt. Der Versatz hat die Länge einer Projektion der Enden der Randverstärkungsleiste 44 auf eine Gerade, die rechtwinkelig zu der Wickelwelle 34 und in der Ebene der Rollobahn 31 liegt.

Die Funktion des Seitenfensterrollos 30 nach Fig. 4 ist ähnlich wie bei dem zuvor erläuterten Seitenfensterrollo 30 nach den Figuren 1 bis 3. Der einzige Unterschied besteht darin, dass die Randverstärkungsleiste 44 ausschließlich durch die Betätigungsglieder 56a und 56b getragen und geführt wird. Es versteht sich, dass diese Betätigungsglieder 56 im ausgefahrenen Zustand parallel zu einander verlaufen.

Damit im ausgefahrenen Zustand die obere Kante der Rollobahn 31 aufgrund der unweigerlich auftretenden Erschütterungen nicht in Schwingungen gerät, können ein oder zwei Aufnahmetaschen 68 vorgesehen werden, wie sie in Fig. 3 gezeigt und in Verbindung mit Fig. 3 auch beschrieben wurden.

Das Aufwickeln der Rollobahn 31 auf der Wickelwelle 34 geschieht wie oben beschrieben beispielsweise mit Hilfe eines in der Wickelwelle 34 untergebrachten Federmotors.

Wenn die Oberkante der Rollobahn 31 entsprechend der Gestalt des Fensters stark gekrümmt ist, wird die Wickelwelle 34 entsprechend weit unten in der Tür 7 untergebracht. Der Abstand der Wickelwelle 34 von der Fensterunterkante 24 bemisst sich wie folgt:

Die Enden der Verstärkungsleiste 44 werden auf eine Gerade projiziert, die in der Ebene der Rollobahn 31 liegt und auf der Wickelwelle 34 senkrecht steht. Die hierdurch auf diese Gerade abgezeichnete Strecke ist das Maß, um das die Wickelwelle 34 unterhalb der Fensterkante 24 vertieft wird.

Sollte dieser Abstand zu groß sein, besteht auch die Möglichkeit, die Rollobahn 31 auf der Wickelwelle 34 kegelstumpfförmig aufzuwickeln, d.h. dafür zu sorgen, dass jene Rollobahnkante, bei der das jeweilige Ende der Verstärkungsleiste 44 den größten Abstand von der Wickelwelle 34 hat, auf einem größeren Durchmesser der Wickelwelle 34 aufgewickelt wird, verglichen mit der gegenüberliegenden Kante, bei der der Abstand zwischen dem freien Ende der Verstärkungsleiste 44 und der Wickelwelle 34 kleiner ist.

Die die beiden Betätigungsglieder 56a und 56b müssen hierbei unterschiedliche Strecken zurücklegen. Sie müssen, ausgehend von der Startposition, nach der gleichen Zeit die obere Endlage erreichen, was bedeutet, dass sie sich mit unterschiedlichen Geschwindigkeiten bewegen müssen.

Die Geschwindigkeiten stehen in einem festen konstanten Verhältnis zueinander. Sie lassen sich realisieren, indem der Getriebemotor 55 für die beiden Betätigungsglieder 56a und 56b getrennte Zahnräder, ähnlich dem Zahnrad 64, nach Fig. 3 bekommt, deren Durchmesser an die unterschiedlichen Relativgeschwindigkeiten angepasst ist.

Im eingefahrenen Zustand erreichen bei optimaler Gestaltung die Enden der Verstärkungsleiste 44 zum gleichen Zeitpunkt den Umfang des auf der Wickelwelle 34 erzeugten Wickels aus der Rollobahn 31, wie dies in Fig. 4 durch die gestrichelte gezeichnete Verstärkungsleiste 44a schematisch angedeutet ist.

Ein Seitenfensterrollo für Kraftfahrzeuge weist eine Wickelwelle auf, die vorzugsweise hinter der Seitenverkleidung der Tür oder der B-Säule drehbar gelagert ist. Durch einen Schlitz in der Tür kann eine Rollobahn herausgezogen werden, die das Fenster abdeckt. Zu diesem Zweck greift an der Kante der Rollobahn, die den weitesten Weg zurücklegt, ein Betätigungsglied an. Das Betätigungsglied ist ein linienförmiges Element, das je nach Ausführung entweder zugfest ist oder drucksteif. Die Rollobahn selbst kann neben dem Fenster mit Hilfe wenigstens einer Führungsschiene oder ein oder zwei druck- oder biegesteifen Betätigungsgliedern aufgespannt gehalten werden.

## Patentansprüche

1. Kraftfahrzeug, das wenigstens ein Seitenfenster (18) aufweist, das von einer unteren etwa horizontal verlaufenden Fensterrahmenkante (24) und wenigstens einer seitlichen etwa senkrecht verlaufenden Fensterrahmenkante (25) begrenzt ist, mit einem Seitenfensterrollo (30):
mit einer drehbar gelagerten Wickelwelle (34), die etwa horizontal verlaufend unterhalb des Fensters (18) angeordnet ist,
mit einer Rollobahn (31), deren Zuschnitt zumindest in einem Abschnitt ihrer Längserstreckung zumindest angenähert der Form des Seitenfensters (18) entspricht und die einen umlaufenden Rollobahnrand aufweist, der einen Abschnitt bildet, der an der Wickelwelle (34) befestigt ist, sowie einen Abschnitt (43), der von der Wickelwelle (34) abliegt,
mit wenigstens einem Betätigungsmittel (56), das mit dem von der Wickelwelle (34) abliegenden Abschnitt (43) des Rollobahnrands verbunden ist,
wobei zu dem Betätigungsmittel (56) wenigstens eine biegesteife Stange (57) gehört, deren freies Ende mit dem Rollobahnrand verbunden ist und die in einer ortsfesten Führungseinrichtung (71) längsverschieblich geführt ist, und wobei die Bewegungsrichtung im wesentlichen rechtwinkelig zu der Achse der Wickelwelle (34) verläuft, und
mit Antriebsmitteln (34, 55) zum kraftbetätigten Ein- und Ausfahren der Rollobahn,
wobei zu den Antriebsmitteln Betätigungsmittel gehören, die im Wesentlichen beigesteife Schubglieder (56) sind, um die Rollobahn (31) von der Wickelwelle (34) abzuziehen,
wobei die Schubglieder (56) an derjenigen Kante der Rollobahn (31) angreifen, die beim Ein- und Ausfahren den größten Weg zurücklegt,
wobei zumindest während des Abwickelvorgangs die Vorderkante der Rollobahn (31) ausschließlich durch die Schubglieder (56) geführt und in Querrichtung gehalten wird,
wozu Schubglieder (56) zumindest in Richtung senkrecht zu einer Ebene, die von der aufgespannten Rollobahn (31) definiert ist, hinreichend biegesteif sind,
wobei die Schubglieder (56) derart gerichtet sind, dass die Oberkante der Rollobahn (31) beim Ausfahren auf der Innenseite der Scheibe entlang gleitet, weil sie an die Scheibe angedrückt wird.

2. Kraftfahrzeug nach Anspruch 1, **dadurch gekennzeichnet, dass** in Richtung parallel dazu die Führung weitgehend durch die Rollobahn selbst in Verbindung mit der Vorspannung erbracht wird, wobei die Schubglieder in dieser Richtung eine geringere Biegesteifigkeit aufweisen.

3. Kraftfahrzeug nach Anspruch 1, **dadurch gekennzeichnet, dass** der Wickelwelle (34) Mittel zugeordnet sind, die bewirken, dass die Rollobahn (31) auf der Wickelwelle (34) einen kegelstumpfförmigen Wickel bildet.

4. Kraftfahrzeug nach Anspruch 1, **dadurch gekennzeichnet, dass** zwei Führungsschienen (45a, 45b) vorgesehen sind, die in wenigstens einem Abschnitt ihrer Länge zumindest angenähert parallel zueinander verlaufen.

5. Kraftfahrzeug nach Anspruch 1, **dadurch gekennzeichnet, dass** es frei von Führungsschienen ist.

6. Kraftfahrzeug nach Anspruch 1, **dadurch gekennzeichnet, dass** der Rollobahnrand zumindest in einem von der Wieckelwelle (34) abliegenden Abschnitt (43) eine Randverstärkung (44, 98) aufweist.

7. Kraftfahrzeug nach Anspruch 6, **dadurch gekennzeichnet, dass** die Randverstärkung (98) flexibel ist.

8. Kraftfahrzeug nach Anspruch 1, **dadurch gekennzeichnet, dass** die Randverstärkung (98) zumindest in einer Ebene biegesteif ist, die durch die aufgespannte Rollobahn (31) gebildet ist.

9. Kraftfahrzeug nach Anspruch 6, **dadurch gekennzeichnet, dass** zumindest ein Abschnitt der Randverstärkung (44) als Zugstange dient.

10. Kraftfahrzeug nach Anspruch 1 oder 6, **dadurch gekennzeichnet, dass** die Wickelwelle (34) gegenüber der unteren Fensterrahmenkante (24) um ein Stück zurückversetzt ist, das der Erstreckung eines Abschnitts der Rollobahn (34) in Wickelrichtung entspricht, vorzugsweise der Projektion eines Abschnitts eines Teils der Randverstärkung (44) auf eine Gerade parallel zu der Wickelrichtung.

11. Kraftfahrzeug nach Anspruch 1, **dadurch gekennzeichnet, dass** zu den Betätigungsmitteln (56) wenigstens ein Seil gehört.

12. Kraftfahrzeug nach Anspruch 1, **dadurch gekennzeichnet, dass** zwei Seile oder Druckglieder vorhanden sind, die mit unterschiedlicher Geschwindigkeit angetrieben sind, wobei das Geschwindigkeitsverhältnis über den Laufweg konstant ist

13. Kraftfahrzeug nach Anspruch 1, **dadurch gekennzeichnet, dass** zu den Antriebsmitteln (39, 55) eine Feder (39) gehört.

14. Kraftfahrzeug nach Anspruch 13, **dadurch gekennzeichnet, dass** die Feder (39) in Gestalt eines Federmotors mit der Wickelwelle (34) gekuppelt ist und die Wickelwelle (34) in Aufrollrichtung der Rollobahn (31) vorspannt.

15. Kraftfahrzeug nach Anspruch 13, **dadurch gekennzeichnet, dass** die Feder (39) über das Betätigungsmittel (56) mit der Rollobahn (31) verbunden ist und die Rollobahn (31) im Sinne des Abwickelns von der Wickelwelle (34) vorspannt.

16. Kraftfahrzeug nach Anspruch 1, **dadurch gekennzeichnet, dass** zu den Antriebsmitteln (39, 55) wenigstens ein Getriebemotor (55) gehört.

17. Kraftfahrzeug nach Anspruch 16, **dadurch gekennzeichnet, dass** der Getriebemotor (55) mit der Wickelwelle (34) gekoppelt ist.

18. Kraftfahrzeug nach Anspruch 17, **dadurch gekennzeichnet, dass** der Getriebemotor (55) über das Betätigungsmittel (56) mit der Rollobahn (31) gekoppelt ist.

19. Kraftfahrzeug nach Anspruch 1, **dadurch gekennzeichnet, dass** bei zwei Betätigungsmitteln der Getriebemotor jedes Betätigungsmittel mit einer anderen Geschwindigkeit antreibt.

20. Kraftfahrzeug nach Anspruch 16, **dadurch gekennzeichnet, dass** zu den Antriebsmitteln (39,55) zwei gesteuerte Motoren gehören, die mit unterschiedlichen Geschwindigkeiten die Betätigungsmittel (56) antreiben.

21. Kraftfahrzeug nach Anspruch 19, **dadurch gekennzeichnet, dass** die Motoren von Mikroprozessor gesteuerten Schrittmotoren gebildet sind.

## Claims

1. Motor vehicle, which has at least one side window (18), which is delimited by a lower window frame edge (24) running approximately horizontally and at least one side window frame edge (25) running approximately perpendicularly, with a side window roller blind (30):
with a rotatably mounted winding shaft (34), which is arranged to run approximately horizontally under the window (18),
with a blind sheet (31), the blank of which corresponds at least in a section of its longitudinal extent at least approximately to the shape of the side window (18) and which has a circumferential blind sheet edge, which forms a section that is fastened to the winding shaft (34), and also a section (43) that is remote from the winding shaft (34),
with at least one operating element (56), which is connected to a section (43) of the blind sheet edge remote from the winding shaft (34),
wherein the operating element (56) includes at least one bend-resistant rod (57), the free end of which is connected to the blind sheet edge and which is guided in a longitudinally displaceable manner in a fixed guide device (71), and wherein the direction of movement runs substantially at right angles to the axis of the winding shaft (34), and
with drive elements (34, 55) for power-operated retraction and extension of the blind sheet,
wherein the drive elements include operating elements that are substantially bend-resistant push elements (56) to draw the blind sheet (31) from the winding shaft (34),
wherein the push elements (56) act on the edge of the blind sheet (31) that covers the longest path during retraction and extension,
wherein at least during the unwinding process the front edge of the blind sheet (31) is guided solely by the push elements (56) and held in transverse direction,
for which purpose the push elements (56) are sufficiently rigid at least in a direction perpendicular to the plane defined by the opened out blind sheet (31),
wherein the push elements (56) are aligned in such a way that the upper edge of the blind sheet (31) slides along the inside of the window pane during extension because it is pressed against the pane.

2. Motor vehicle according to claim 1, **characterised in that** in a direction parallel thereto the guidance is predominantly achieved by the blind sheet itself in association with the bias, wherein the push elements have a lower bend-resistance in this direction.

3. Motor vehicle according to claim 1, **characterised in that** the winding shaft (34) has associated elements, which cause the blind sheet (31) to form a truncated cone-shaped bundle on the winding shaft (34).

4. Motor vehicle according to claim 1, **characterised in that** two guide rails (45a, 45b) are provided, which run at least approximately parallel to one another in at least one section of their length.

5. Motor vehicle according to claim 1, **characterised in that** it is free from guide rails.

6. Motor vehicle according to claim 1, **characterised in that** the blind sheet edge has an edge reinforcement (44, 98) in at least one section (43) remote from the winding shaft (34).

7. Motor vehicle according to claim 6, **characterised in that** the edge reinforcement (98) is flexible.

8. Motor vehicle according to claim 1, **characterised in that** the edge reinforcement (98) is bend-resistant at least in a plane, which is formed by the opened out blind sheet (31).

9. Motor vehicle according to claim 6, **characterised in that** at least one section of the edge reinforcement (44) serves as a pull rod.

10. Motor vehicle according to claim 1 or 6, **characterised in that** the winding shaft (34) is set back a short distance relative to the lower window frame edge (24) that corresponds to the extent of a section of the blind sheet (34) in winding direction, preferably to the projection of a section or part of the edge reinforcement (44) onto a straight line parallel to the winding direction.

11. Motor vehicle according to claim 1, **characterised in that** the operating elements (56) include at least one cord.

12. Motor vehicle according to claim 1, **characterised in that** two cords or pusher elements are present, which are driven at different speed, wherein the speed ratio is constant over the running path.

13. Motor vehicle according to claim 1, **characterised in that** the drive elements (39, 55) include a spring (39).

14. Motor vehicle according to claim 13, **characterised in that** the spring (39) is coupled to the winding shaft (34) in the form of a spring motor and biases the winding shaft (34) in the wind-up direction of the blind sheet (31).

15. Motor vehicle according to claim 13, **characterised in that** the spring (39) is connected to the blind sheet (31) by means of the operating element (56) and biases the blind sheet (31) in the sense of unwinding from the winding shaft (34).

16. Motor vehicle according to claim 1, **characterised in that** the drive elements (39, 55) include at least one geared motor (55).

17. Motor vehicle according to claim 16, **characterised in that** the geared motor (55) is coupled to the winding shaft (34).

18. Motor vehicle according to claim 17, **characterised in that** the geared motor (55) is coupled to the blind sheet (31) by means of the operating element (56).

19. Motor vehicle according to claim 1, **characterised in that** in the case of two operating elements, the geared motor of each operating element drives at a different speed.

20. Motor vehicle according to claim 16, **characterised in that** the drive elements (39, 55) include two controlled motors, which drive the operating elements (56) at different speeds.

21. Motor vehicle according to claim 19, **characterised in that** the motors are formed by microprocessor-controlled stepping motors.

## Revendications

1. Véhicule automobile comportant au moins une vitre latérale (18) limitée par un bord d'encadrement inférieur de vitre (24) s'étendant à peu près horizontalement et par au moins un bord d'encadrement latéral de vitre (25) s'étendant à peu près verticalement, avec un store de vitre latérale (30) :
comprenant un arbre enrouleur (34) monté tournant et disposé à peu près horizontalement sous la vitre (18),
comprenant un panneau de store (31) dont la découpe correspond, au moins dans une partie de son extension longitudinale, au moins approximativement à la forme de la vitre latérale (18) et qui comporte une bordure de panneau de store périphérique formant une partie fixée à l'arbre enrouleur (34) ainsi qu'une partie (43) éloignée de l'arbre enrouleur (34),
comprenant au moins un moyen d'actionnement (56) relié à la partie (43) de la bordure de panneau de store éloignée de l'arbre enrouleur (34),
le moyen d'actionnement (56) comprenant au moins une tige rigide (57) dont l'extrémité libre est reliée à la bordure de panneau de store et est guidée à coulissement longitudinal dans un dispositif de guidage (71) fixe, la direction de déplacement étant essentiellement perpendiculaire à l'axe de l'arbre enrouleur (34), et
comprenant des moyens d'entraînement (34, 55) pour la rentrée et la sortie motorisées du panneau de store,
les moyens d'entraînement comprenant des moyens d'actionnement qui sont essentiellement des éléments coulissants (56) rigides servant à dérouler le panneau de store (31) de l'arbre enrouleur (34),
les éléments coulissants (56) agissant sur le bord du panneau de store (31) qui parcourt la plus grande distance lors de la rentrée et de la sortie,
le bord avant du panneau de store (31) étant guidé et maintenu en direction transversale exclusivement par les éléments coulissants (56) au moins pendant le processus de déroulement,
les éléments coulissants (56) étant, à cet effet, suffisamment rigides au moins dans la direction perpendiculaire à un plan défini par le panneau de store (31) déployé,
les éléments coulissants (56) étant orientés de façon que, lors de la sortie, le bord supérieur du panneau de store (31) glisse le long du côté intérieur de la vitre car il est pressé contre la vitre.

2. Véhicule automobile selon la revendication 1, **caractérisé en ce que**, dans une direction parallèle à ce plan, le guidage est réalisé en grande partie par le panneau de store proprement dit, en combinaison avec la précontrainte, les éléments coulissants présentant une rigidité plus faible dans cette direction.

3. Véhicule automobile selon la revendication 1, **caractérisé en ce qu'**à l'arbre enrouleur (34) sont associés des moyens qui permettent au panneau de store (31) de former un enroulement de forme tronconique sur l'arbre enrouleur (34).

4. Véhicule automobile selon la revendication 1, **caractérisé en ce qu'**il est prévu deux rails de guidage (45a, 45b) qui s'étendent au moins approximativement parallèlement l'un à l'autre sur au moins une partie de leur longueur.

5. Véhicule automobile selon la revendication 1, **caractérisé en ce qu'**il ne comporte pas de rails de guidage.

6. Véhicule automobile selon la revendication 1, **caractérisé en ce que** la bordure de panneau de store comporte un renfort de bordure (44, 98) au moins dans une partie (43) éloignée de l'arbre enrouleur (34).

7. Véhicule automobile selon la revendication 6, **caractérisé en ce que** le renfort de bordure (98) est souple.

8. Véhicule automobile selon la revendication 1, **caractérisé en ce que** le renfort de bordure (98) est rigide au moins dans un plan formé par le panneau de store (31) déployé.

9. Véhicule automobile selon la revendication 6, **caractérisé en ce qu'**au moins une partie du renfort de bordure (44) sert de tige de traction.

10. Véhicule automobile selon la revendication 1 ou 6, **caractérisé en ce que** l'arbre enrouleur (34) est en retrait par rapport au bord d'encadrement inférieur de vitre (24) d'une portion qui correspond à l'extension d'une partie du panneau de store (34) dans la direction d'enroulement, de préférence à la projection d'une partie d'un tronçon du renfort de bordure (44) sur une droite parallèle à la direction d'enroulement.

11. Véhicule automobile selon la revendication 1, **caractérisé en ce que** les moyens d'actionnement (56) comprennent au moins un câble.

12. Véhicule automobile selon la revendication 1, **caractérisé en ce qu'**il est prévu deux câbles ou éléments coulissants qui sont entraînés à des vitesses différentes, le rapport des vitesses étant constant sur la course de déplacement.

13. Véhicule automobile selon la revendication 1, **caractérisé en ce que** les moyens d'entraînement (39, 55) comprennent un ressort (39).

14. Véhicule automobile selon la revendication 13, **caractérisé en ce que** le ressort (39) est couplé à l'arbre enrouleur (34) sous la forme d'un moteur à ressort, et précontraint l'arbre enrouleur (34) dans la direction d'enroulement du panneau de store (31).

15. Véhicule automobile selon la revendication 13, **caractérisé en ce que** le ressort (39) est relié au panneau de store (31) par l'intermédiaire du moyen d'actionnement (56) et précontraint le panneau de store (31) dans le sens du déroulement de l'arbre enrouleur (34).

16. Véhicule automobile selon la revendication 1, **caractérisé en ce que** les moyens d'entraînement (39, 55) comprennent au moins un motoréducteur (55).

17. Véhicule automobile selon la revendication 16, **caractérisé en ce que** le motoréducteur (55) est couplé à l'arbre enrouleur (34).

18. Véhicule automobile selon la revendication 17, **caractérisé en ce que** le motoréducteur (55) est couplé au panneau de store (31) par l'intermédiaire du moyen d'actionnement (56).

19. Véhicule automobile selon la revendication 1, **caractérisé en ce que**, en présence de deux moyens d'actionnement, le motoréducteur entraîne chaque moyen d'actionnement à une vitesse différente.

20. Véhicule automobile selon la revendication 16, **caractérisé en ce que** les moyens d'entraînement (39, 55) comprennent deux moteurs commandés qui entraînent les moyens d'actionnement (56) à des vitesses différentes.

21. Véhicule automobile selon la revendication 19, **caractérisé en ce que** les moteurs sont formés par des moteurs pas à pas commandés par microprocesseur.
